# EUROPEAN PATENT SPECIFICATION

(11) **EP 1 552 651 B1**
(45) Date of publication and mention of the grant of the patent: **09.04.2008**
(21) Application number: 03761593.7
(22) Date of filing: 27.06.2003
(51) Int. Cl.: H04L 12/28

(54) **METHOD FOR ESTABLISHING A DEFAULT CONNECTION IN A NETWORK, AND ASSOCIATED SOURCE AND SINK DEVICES**
VERFAHREN ZUR HERSTELLUNG EINER VORGABENVERBINDUNG IN EINEM NETZWERK UND ASSOZIIERTE QUELLEN- UND SENKENEINRICHTUNGEN
PROCEDE POUR ETABLIR UNE CONNEXION PAR DEFAUT DANS UN RESEAU ET DISPOSITIFS SOURCES ET COLLECTEURS ASSOCIES

(30) Priority: 28.06.2002 EP 02291613
(43) Date of publication of application: 13.07.2005
(73) Proprietor: Thomson Licensing, 92100 Boulogne-Billancourt (FR)
(72) Inventor: WEBER, Michael, 30559 Hannover (DE)
(74) Representative: Kohrs, Martin
(86) International application number: PCT/EP2003/050271
(87) International publication number: WO 2004/004221

(56) References cited:
- EP-A- 1 051 028
- EP-A- 1 193 937
- WO-A-00/23907
- US-A1- 2002 078 259
- LEA R ET AL: "NETWORKING HOME ENTERTAINMENT DEVICES WITH HAVI" COMPUTER, IEEE COMPUTER SOCIETY, LONG BEACH., CA, US, US, vol. 33, no. 9, 1 September 2000 (2000-09-01), pages 35-43, XP000987591 ISSN: 0018-9162

## Description

### Field of the invention

The invention relates to a home network and the establishment of connections between devices in this network. More particularly the invention concerns a network of multiple electronic devices, such as consumer electronic video source and video display devices, interconnected using for example digital data buses.

### Background of the invention

In a home network, electronic devices such as television receivers, display devices, video-cassette recorders (VCR), direct broadcast satellite (DBS) receivers, and home control devices (e.g., a security system or a temperature control device) may be interconnected via a data bus. Communication using a data bus occurs in accordance with a bus protocol. Examples of bus protocols include the Consumer Electronics Bus (CEBus) and the IEEE 1394 High Performance Serial Bus.

A bus protocol typically provides for communicating both control information and data.

Unlike analogue connections between two devices, in which the connection link itself defines the start and end points for a communication between the devices, a digital bus connection between devices may not obviously define how the devices are to communicate between each other. Therefore it is necessary to explicitly set which devices are to communicate between each other.

The international patent application published under reference WO99/14946 relates to consumer electronic devices connected over a digital bus, i.e., the IEEE 1394 serial bus. Remote control commands given by a user through a display device are relayed to the controlled device over the serial bus. The display device may set up isochronous connections.

The European patent application published under reference EP1056021 A2 relates to electronic equipment for use with a communication system connected by a communication bus such as an IEEE 1394 bus. Each of the equipment connected to an IEEE 1394 bus may include a register provided within a RAM to thereby set a transmission or reception default channel. If channels used in the transmission and the reception are not set when the transmission is started, then the default channel may be used.

In the prior art, the technical article "Networking home entertainment devices with HAVi" (Lea et al., IEEE Computer Society, September 1, 2000) is known. HAVi facilitates multivendor interoperability between consumer electronics devices and computing devices, and simplifies the development of distributed applications on home networks. The HAVi architecture, discussed and explained in this article, also facilitates the innovation and introduction of new features or refinements. *Lea et al*. does not teach or suggest a sink device having means for automatically establishing, upon selection of a function of a source device by the user through a user interface, a connection between the data source device and the data sink device, said data sink device becoming the default destination device for communication with the data source device.

The US patent application No. US 2002/078259 discloses a communication system comprising a HAVi-based in-home network and a remote device operative to communicate with an intermediate device of the in-home network via Internet. This US patent application does not teach or suggest a sink device having means for automatically establishing, upon selection of a function of a source device by the user through a user interface, a connection between the data source device and the data sink device, said data sink device becoming the default destination device for communication with the data source device.

### Summary of the invention

The invention concerns a sink device for connection to a digital network comprising:
means for displaying a user interface for controlling a data source device connected to the network;
characterized by:
means for controlling network resource allocation and for automatically establishing, upon selection of a function of the source device by the user through the user interface, a connection between the data source device and the data sink device as default destination device of the connection, wherein said sink device has playback capability of the data of the source device.

The sink device becomes the default destination of the data of the source device as soon as the source device is selected through the user interface of the sink device. Thus, the user does not have to explicitly select the display device he is watching as the sink device for the data to be transmitted.

According to an embodiment of the invention, the connection is an isochronous transmission connection comprising allocation of a channel and of bandwidth.

According to an embodiment of the invention, the controlling means of the sink device carry out a check for an existing connection from the source device to another sink device, and in the affirmative, do not automatically set up the connection between the source device and the sink device.

According to an embodiment of the invention, the selected function is a playback function.

This is advantageous in particular when the source device is a storage device requiring control of playback through start/stop type controls. Indeed, in such a case, it is not necessary to set up a connection before the actual playback starts (instead of setting up the connection earlier, for example when the source device is selected through the user interface).

According to an embodiment, the function is a selection function of the source device. This case is more adapted to devices capable of continuously outputting data, such as a tuner.

According to an embodiment of the invention, the sink device further comprises memory for storing software downloaded from the source device, wherein said software is adapted to control the automatic establishment of the connection between the source device and the sink device and wherein said user interface is derived from said software.

Consequently, it becomes easy to adapt the connection set-up process to the device type, since different devices may include different software.

The invention also concerns a method for setting up a data stream connection in a digital network comprising a source device and a sink device, said method comprising the steps of:
- executing a user interface on the sink device;
- selecting a function of the source device through the user interface;
characterized by the step of
- automatically establishing a connection for data transmission from the data source device to the data sink device as default destination device of the connection, wherein said sink device has playback capability of the data of the source device.

The invention also concerns a data source device for connection to a communication network comprising at least one sink device, said data source device comprising software for downloading by a sink device, said software providing control functions of the data source device for access by a user through the sink device, characterized in that said software is adapted to the control of automatically establishing, upon selection of a data reproduction function by a user, a connection for transmission of data from the data source device to the sink device on which the reproduction function was selected.

### Brief description of the figures

A non-restricting embodiment of the invention will now be described in greater detail with reference to the accompanying drawings, in which
Fig. 1 contains a schematic representation of a digital home network according to the embodiment ;
Fig. 2 contains a flow chart illustrating a process for setting a data flow connection according to the embodiment.

### Description of the preferred embodiments

One example of a home network in which the devices are connected over an IEEE 1394 digital bus is described in the HAVi digital AV networking initiative. HAVi is an industry standard that provides a home networking software specification for seamless interoperability among home electronic consumer devices, mainly digital audio and video devices. HAVi defines an operating-system-neutral middleware that manages multi-directional AV streams, event schedules, and registries. Furthermore HAVi provides Application Programming Interfaces (API) for creating software applications.

As each device is added and connected to a HAVi network system, it is automatically registered by the system so that other devices know what it is capable of. A newly connected device may provide a Graphical User Interface (GUI) by means of a Havlet, i.e., a module of code which is downloaded from the newly connected device by devices already connected on the network. More precisely, a newly connected device may be controlled through any other connected device that executes the Havlet and possibly displays the corresponding GUI.

As an example, a newly connected DVCR may provide a Havlet on a network which comprises a DTV. After automatic registration of the DVCR in the HAVi network system, the DVCR may be selected on the screen of the DTV. Subsequently the Havlet of the DVCR is downloaded to the DTV. The execution of the Havlet results in the corresponding GUI being displayed on the screen of the DTV. The GUI offers possibilities to control the operation of the DVCR. A user may for example through the GUI select to playback video information available through the DVCR.

The Havlet on the DTV first checks for the existence of an isochronous connection between the DVCR and a target/sink device other than the DTV. If such a connection exists, then no further isochronous connection is automatically set up. Transmission over the existing channel and playback on the sink device can start.

In order to play back video information from the DVCR, the Havlet on the DTV checks whether an isochronous data flow exists between the DVCR and the DTV. If this is the case, playback starts.

In case there is no isochronous data flow set up between both devices, the Havlet uses a stream manager of the DTV that sends control information to the DVCR in order to establish an isochronous data flow connection between them. The stream manager requests allocation of an isochronous channel and of corresponding bandwidth, and then modifies the concerned output plug control register of the DVCR by asynchronous transactions on the IEEE 1394 serial bus. The stream manager thereby sets an oPCR of the DVCR to transmit over a determined channel, and an iPCR of the DTV to receive over the determined channel. The stream manager also instructs respective DCMs of the DVCR and of the DTV to set up the internal connections in these devices, between the plugs mentioned above, and the FCMs of the devices. Once the isochronous connection is in place, the playback starts.

It has been described how to automatically establish an isochronous data flow between a device to be controlled, and between a device which has downloaded and is executing the Havlet from the device to be controlled. The described process assures that the device which executes the Havlet is considered as default device for communication with the device issuing the Havlet, in the absence of any indication to the contrary. Note that the default playback device is not predefined in the Havlet: it is the device executing the Havlet. The process eliminates the need to manually set an isochronous data flow between devices. The process may also overrun an initial default setting of the devices for using a default communication channel, the initial default settings existing before the concerned device is connected to the network.

It has been further described to make use of an Havlet to produce a GUI that offers possibilities to control the operation of the DVCR.

As an alternative, a proprietary GUI included in the DTV could offer similar possibilities to control the operation of the DVCR. In this case no Havlet is downloaded to the DTV. However, the Havlet solution is preferred: since the Havlet itself is in control of establishing the connection between the source device and the display device, it is possible to adapt the behaviour for each individual source device. I.e. one DVCR may comprise a Havlet creating automatically the connection, while a second DVCR may comprise a Havlet that does not create the connection.

Moreover, the invention applies to other environments than HAVi: other downloadable executable programs than a Havlet may carry out similar functions in these environments.

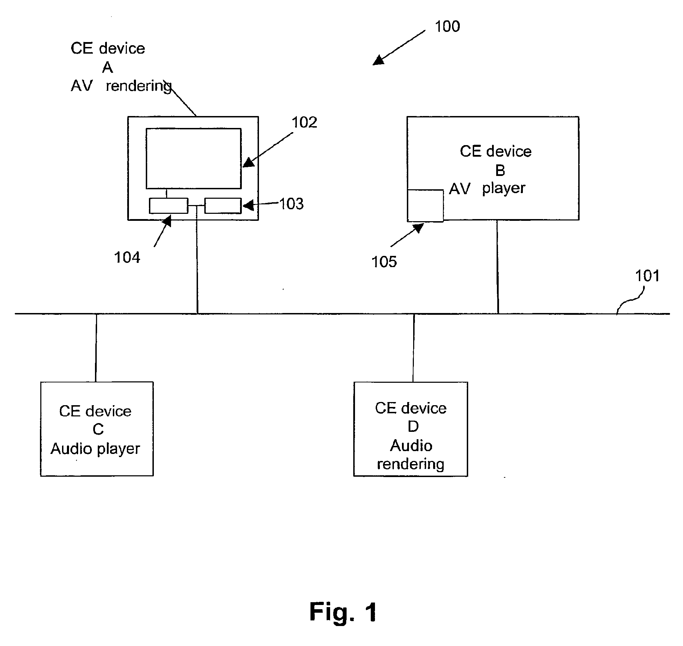

Referring to Fig. 1, a schematic representation of a digital home network 100 comprises a digital bus 101 to which a Consumer Electronic Device A (CED-A) is connected. The CED-A is capable of rendering Audio and Video type information such as for example movies or sound records. It comprises a display 102 and a memory 103 under the control of a microprocessor 104. Microprocessor 104 runs programs stored in memory 103. CED-A is for example a digital television receiver (DTV). CED-B is a storage device with playback capability, such as a digital video cassette recorder (DVCR). It comprises a Havlet 105 in a memory (not illustrated) accessible by other devices of the network.

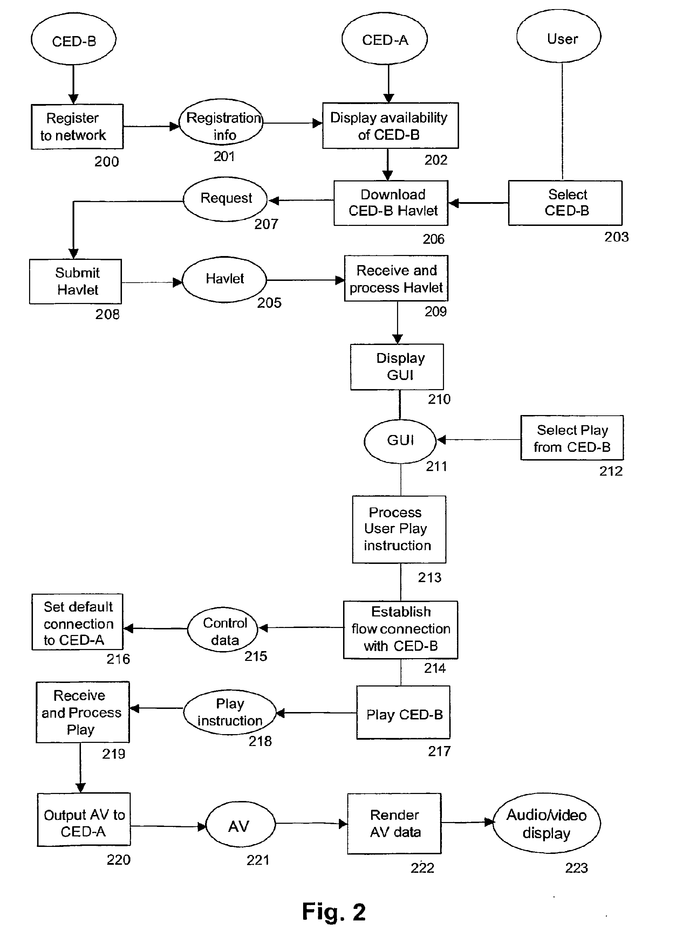

Referring to Fig. 2, a flow chart illustrates the establishment of a default connection between CED-A and CED-B. After CED-B is connected to the digital data bus, event messages are generated to announce the new software elements (e.g. functional component modules) of the new device. CED-A now knows that the device CED-B is connected to the network and makes its availability known to the user by displaying CED-B in a list on the TV screen (box 202). A user selecting CED-B (box 203) causes CED-A to download a Havlet 205 from CED-B. More precisely CED-A sends a request (box 206 and 207) to CED-B, that in answer returns (box 208) the Havlet 205. The Havlet 205 is received and processed by CED-A (box 209). The processing of Havlet 205 results in the display of a Graphical User Interface for CED-B by CED-A (box 210 and 211). The GUI enables access to services offered by CED-B by producing a display of control functions accessible to the user at CED-A. Hence the user may send controls from CED-A to CED-B to control for example the playing of AV data.

A user instruction 212 selected on the GUI 211 instructs to play AV data from CED-B. The instruction is processed by CED-A (box 213) and the necessary action to establish a data flow connection with CED-B is taken (box 214) by sending control data 215 to CED-B. Connection parameters are set in CED-A and CED-B as appropriate to create the connection as required by CED-A (box 216). Once the data flow connection is established, the user instruction is forwarded to CED-B (box 217) as a play instruction 218 that is in a format usable by CED-B (i.e. and appropriate API method call). The play instruction 218 is received and processed by CED-B (box 219), that in turn outputs (box 220) requested AV data 221. The CED-A processes the AV data for rendering (box 222) and generates AV output 223.

Hence when CED-B is connected to the digital home network, and a data rendering function from CED-B is selected through a GUI displayed by CED-A, any AV output from CED-B is automatically directed to CED-A for rendering.

It has been described to automatically establish a data flow connection after an instruction to play AV data from CED-B has been given. In an alternative embodiment of the invention, the data flow may well be established before an instruction to play AV data is given. In this case the connection is automatically established as a result of the processing in CED-A of the Havlet from CED-B. Note that this alternative embodiment is more adapted to functional component modules that do not have a start playback /stop playback feature, such as a tuner. For a functional component module having the start/stop feature, reservation should only be done when required (e.g. when reproduction of an A/V programme is requested) to avoid tying up the limited isochronous resources unnecessarily. A reserved channel and its associated bandwidth cannot be reallocated until they are released, even if the bandwidth is not used at all or not to its full extent. For a tuner, selection of the corresponding device (or launching of the corresponding Havlet) is sufficient to trigger the automatic channel set up, since no further command has to be given by the user to start the data transmission. Again, the fact that the Havlet controls the triggering of the automatic connection is an advantageous feature in such a case.

The behaviour relative to a tuner type device compared to a DVCR type device is then the following:
(a) No connection exists to the display device (e.g. the DTV)
   If the user selects the tuner, a connection is created from the tuner to the display device
   If the user activates playback of the DVCR, a connection is created from the DVCR to the display device
(b) A connection exists between the tuner type device and the display device
   If the user selects the tuner, no further connection needs to be created.
   If the user activates playback of the DVCR, the display device indicates the existence of the connection with the tuner and asks the user whether he wants to cancel the existing connection. If the user agrees, the existing connection is cancelled and a new connection from the DVCR to the display device is established (and the playback is started)
(c) A connection exists between the DVCR type device and the display device
   If the user selects the tuner, the display device indicates the existence of the connection with the DVCR and asks the user whether he wants to cancel the existing connection. If the user agrees, the existing connection is cancelled and a new connection from the tuner to the display device is established.
   If the user activates playback of the DVCR, no further connection needs to be created.
   If the user activates the stop function of the DVCR, the DVCR is disconnected from the DTV.
(d) A connection exists between a further device and the display device
   If the user selects the tuner, the display device indicates the existence of the connection with the further device and asks the user whether the further device should be disconnected. If the user agrees, then the existing connection is cancelled and a new connection between the tuner and the display device is established.
   If the user activates the playback function of the DVCR device, the display device indicates the existence of the connection with the further device and asks the user whether the further device should be disconnected. If the user agrees, then the existing connection is cancelled and a new connection between the DVCR and the display device is established.

The only tasks performed by the user are the choice of a function (tuner selection, playback...) and, if necessary, the confirmation of the cancellation of a stream.

The example described in relation to Fig. 2 specifically makes use of a Havlet downloaded from CED-B to display a GUI at CED-A. Alternatively, a GUI may well be created by executing specific software in CED-A instead of the Havlet. The specific software may for example be supplied by a manufacturer of CED-A and be designed to make available functions of devices connected to the digital network. The specific software makes the functions of CED-B available once CED-B is registered with CED-A. In the case of executing the specific software instead of the Havlet, the method for establishing a default data flow connection remains similar to the method described in relation to Fig. 2. It is possible to adapt the behaviour of the software according to the source type.

Referring again to Fig. 1, a further device CED-C is connected to the digital home network. CED-C is specialized in playback of Audio data. A similar process as previously described for CED-B may be applied to establish a default data flow connection between CED-C and CED-A in order to use CED-A for rendering Audio data when the play function of CED-C is activated. In this case CED-C registers with CED-A and a user may select CED-C on the display of CED-A. A Havlet is downloaded from CED-C to CED-A and a GUI displayed. The user may select functions of CED-C through this GUI. Any output from CED-C is automatically directed to the audio rendering in CED-A through the default data flow connection, since the user selection was made through CED-A, which also has the rendering or display capability. The same tests for pre-existing connections may apply in the present case.

An optional device CED-D may be connected to the digital data bus 101 to expand the digital home network. The CED-D is specialized in High Fidelity sound rendering.

If CED-C is connected, a default data flow connection between CED-C and CED-D may be established to render audio data. The data flow connection is established in case the user selects a function of CED-D through an appropriate user interface on CED-D. The user interface may be the result of downloading and processing a Havlet from CED-C to CED-D. Alternatively CED-D may execute another user interface, for example a standardized user interface of the CED-D manufacturer that makes available functions of CED-C, without downloading a Havlet.

A further advantage of the invention becomes apparent when a second AV rendering device CED-AA is connected to the digital home network (not shown in Fig. 1), and CED-AA is located in a different room of the home than CED-A. In this case CED-B is also known to CED-AA and may therefore be selected by a user of CED-AA. Upon selection, the CED-B Havlet is downloaded to CED-AA to produce a GUI. The user sends a play instruction through the GUI and a default data flow connection is established between CED-B and CED-AA.

Hence a default data connection is always automatically established between the rendering device being used by the user and the CED-B device. The user may select functions of CED-B on any rendering device, for example on anyone of a plurality of devices in different rooms of a home without explicitly setting up a data connection. The latter is automatically solved by the invention as described. The output of CED-B is rendered on the device currently used by the user.

While the examples described herein concern electronic equipment connected via the IEEE 1394 bus the invention may be similarly applied to electronic equipment used in a system connected via another type of communication bus.

While mainly playback type functions have been described in the embodiment, the invention is not limited to such functions. In the case a user wishes to record a stream on a recording device (such as the DVCR mentioned above), he may achieve automatic connection of the stream source to the display device, in order to be able to check what is being recorded. Similar conditions relating to pre-existing connection can be applied. The connection between the source device and the recording device can be established through other means (e.g. by selecting the DVCR as a target through the user interface).

## Claims

1. Sink device (CED-A, CED-D) for connection to a digital network (100) comprising
means for displaying (102, 211) a user interface for controlling a data source device (CED-B; CED-C) connected to the network;
**characterized by**:
means for controlling (104, 214-216) network resource allocation and for automatically establishing, upon selection (212, 213) of a function of the source device by the user through the user interface, a connection between the data source device and the data sink device, said data sink device becoming the default destination device for communication with the data source device ; and
said sink device being further **characterized in that** it includes means adapted to perform playback of data received from the source device.

2. Sink device according to claim 1, wherein the connection is an isochronous transmission connection comprising allocation of a channel and of bandwidth.

3. Sink device according to claims 1 or 2, wherein the controlling means of the sink device are adapted to carry out a check for an existing connection from the source device to another sink device, and in the affirmative, do not automatically set up the connection between the source device and the sink device.

4. Sink device according to one of the claims 1 to 3, wherein said function is a playback function.

5. Sink device according to claim 4, wherein said sink device is adapted to generate controls for starting and stopping reading from storage means of the source device.

6. Sink device according to one of the claims 1 to 3, wherein said function is a selection function of the source device.

7. Sink device according to one of the claims 1 to 6, further comprising memory for storing software (105) downloaded from the source device, wherein said software is adapted to control the automatic establishment of the connection between the source device and the sink device and wherein said user interface is derived from said software.

8. Sink device according to claim 7, wherein said software is a HAVi Havlet (105) and the network is a HAVi network.

9. Method for setting up a data stream connection in a digital network (100) comprising a source device (CED-B, CED-C) and a sink device, said method comprising the steps of:
- executing a user interface (210, 211) on the sink device;
- selecting a function of the source device through the user interface;
**characterized by** the step of:
- automatically establishing a connection for data transmission from the data source device to the data sink device, said data sink device becoming the default destination device for communication with the data source device ; and
the method being further **characterized in that** it comprises the step of said data sink device, performing playback of data received from the source device.

10. Method according to claim 9, further comprising the step of deriving the user interface from software downloaded by the sink device from the source device.

11. Method according to claim 10, wherein the network is a HAVi network and the software is a HAVi Havlet.

12. Method according to one of the claims 10 or 11, wherein the downloaded software controls the establishment of the connection.

13. Method according to one of the claims 9 to 12, further comprising the step, prior to establishing the connection, of verifying the existence of a preexistent connection between the source device and a further sink device, and carrying of the connection establishment step only in the negative.

14. Method according to one of the claims 9 to 13, wherein said function is a playback function, and said source device is a data storage device.

## Patentansprüche

1. Senkeneinrichtung (CED-A, CED-D) zur Verbindung mit einem digitalen Netzwerk (100), umfassend:
Mittel zum Anzeigen (102, 211) einer Benutzeroberfläche zum Steuern einer mit dem Netzwerk verbundenen Datenquelleneinrichtung (CED-B, CED-C);
**gekennzeichnet durch**
Mittel zum Steuern (104, 214-216) der Netzwerkbetriebsmittelzuteilung und zum automatischen Herstellen einer Verbindung zwischen der Datenquelleneinrichtung und der Datensenkeneinrichtung bei Auswahl (212, 213) einer Funktion der Quelleneinrichtung **durch** den Benutzer über die Benutzeroberfläche, wobei die Datensenkeneinrichtung zu der Vorgabe-Zieleinrichtung für die Kommunikation mit der Datenquelleneinrichtung wird; und
wobei die Senkeneinrichtung ferner **dadurch gekennzeichnet ist**, daß sie Mittel enthält, die dafür ausgelegt sind, eine Wiedergabe von aus der Quelleneinrichtung empfangenen Daten durchzuführen.

2. Senkeneinrichtung nach Anspruch 1, wobei die Verbindung eine isochrone Übertragungsverbindung ist, die Zuteilung eines Kanals und von Bandbreite umfaßt.

3. Senkeneinrichtung nach Anspruch 1 oder 2, wobei die Steuermittel der Senkeneinrichtung dafür ausgelegt sind, eine Prüfung auf eine bestehende Verbindung von der Quelleneinrichtung zu einer anderen Senkeneinrichtung auszuführen und im affirmativen Fall nicht automatisch die Verbindung zwischen der Quelleneinrichtung und der Senkeneinrichtung herzustellen.

4. Senkeneinrichtung nach einem der Ansprüche 1 bis 3, wobei die Funktion eine Wiedergabefunktion ist.

5. Senkeneinrichtung nach Anspruch 4, wobei die Senkeneinrichtung dafür ausgelegt ist, Steuerelemente zum Starten und Stoppen des Lesens aus Speichermitteln der Quelleneinrichtung zu erzeugen.

6. Senkeneinrichtung nach einem der Ansprüche 1 bis 3, wobei die Funktion eine Auswahlfunktion der Quelleneinrichtung ist.

7. Senkeneinrichtung nach einem der Ansprüche 1 bis 6, ferner mit Speicher zum Speichern von aus der Quelleneinrichtung heruntergeladener Software (105), wobei die Software dafür ausgelegt ist, die automatische Herstellung der Verbindung zwischen der Quelleneinrichtung und der Senkeneinrichtung zu steuern, und wobei die Benutzeroberfläche aus der Software abgleitet wird.

8. Senkeneinrichtung nach Anspruch 7, wobei die Software ein HAVi-Havlet (105) und das Netzwerk ein HAVi-Netzwerk ist.

9. Verfahren zum Aufbauen einer Datenstromverbindung in einem digitalen Netzwerk (100) mit einer Quelleneinrichtung (CED-B, CED-C) und einer Senkeneinrichtung, wobei das Verfahren die folgenden Schritte umfaßt:
- Ausführen einer Benutzeroberfläche (210, 211) auf der Senkeneinrichtung;
- Auswählen einer Funktion der Quelleneinrichtung durch die Benutzeroberfläche;
**gekennzeichnet durch** den folgenden Schritt:
automatisches Herstellen einer Verbindung für eine Datenübertragung von der Datenquelleneinrichtung zu der Datensenkeneinrichtung, wobei die Datensenkeneinrichtung zu der Vorgabe-Zieleinrichtung für die Kommunikation mit der Datenquelleneinrichtung wird; und
wobei das Verfahren ferner **dadurch gekennzeichnet ist**, daß es den Schritt umfaßt, daß die Datensenkeneinrichtung eine Wiedergabe von aus der Quelleneinrichtung empfangenen Daten durchführt.

10. Verfahren nach Anspruch 9, ferner mit dem Schritt des Ableitens der Benutzeroberfläche aus durch die Senkeneinrichtung von der Quelleneinrichtung heruntergeladener Software.

11. Verfahren nach Anspruch 10, wobei das Netzwerk ein HAVi-Netzwerk und die Software ein HAVi-Havlet ist.

12. Verfahren nach einem der Ansprüche 10 oder 11, wobei die heruntergeladene Software die Herstellung der Verbindung steuert.

13. Verfahren nach einem der Ansprüche 9 bis 12, ferner mit dem folgenden Schritt vor dem Herstellen der Verbindung: Verifizieren des Bestehens einer bereits existierenden Verbindung zwischen der Quelleneinrichtung und einer weiteren Senkeneinrichtung und Ausführen des Schritts des Herstellens der Verbindung nur im negativen Fall.

14. Verfahren nach einem der Ansprüche 9 bis 13, wobei die Funktion eine Wiedergabefunktion ist und die Quelleneinrichtung eine Datenspeichereinrichtung ist.

## Revendications

1. Dispositif collecteur (CED-A, CED-D) pour une connexion à un réseau numérique (100) comprenant
des moyens pour afficher (102, 211) une interface utilisateur pour commander un dispositif source de données (CED-B ; CED-C) connecté au réseau ;
**caractérisé par** :
des moyens pour commander (104, 214 à 216) une attribution de ressources réseau et pour établir automatiquement, suite à une sélection (212, 213) d'une fonction du dispositif source par l'utilisateur via l'interface utilisateur, une connexion entre le dispositif source de données et le dispositif collecteur de données, ledit dispositif collecteur de données devenant le dispositif de destination par défaut pour une communication avec le dispositif source de données ; et
ledit dispositif collecteur étant **caractérisé en outre en ce qu'**il comprend un moyen adapté pour effectuer une lecture des données reçues du dispositif source.

2. Dispositif collecteur selon la revendication 1, dans lequel la connexion est une connexion de transmission isochrone comprenant une attribution d'un canal et d'une bande passante.

3. Dispositif collecteur selon les revendications 1 ou 2, dans lequel les moyens de commande du dispositif collecteur sont adaptés pour effectuer un contrôle d'une connexion existante du dispositif source à un autre dispositif récepteur, et dans l'affirmative, n'établissent pas automatiquement la connexion entre le dispositif source et le dispositif collecteur.

4. Dispositif collecteur selon une des revendications 1 à 3, dans lequel ladite fonction est une fonction de lecture.

5. Dispositif collecteur selon la revendication 4, dans lequel ledit dispositif collecteur est adapté pour générer des commandes pour démarrer et arrêter une lecture à partir du moyen de stockage du dispositif source.

6. Dispositif collecteur selon une des revendications 1 à 3, dans lequel ladite fonction est une fonction de sélection du dispositif source.

7. Dispositif collecteur selon une des revendications 1 à 6, comprenant en outre une mémoire pour stocker un logiciel (105) téléchargé à partir du dispositif source, dans lequel ledit logiciel est adapté pour commander l'établissement automatique de la connexion entre le dispositif source et le dispositif collecteur et dans lequel ladite interface utilisateur est dérivée dudit logiciel.

8. Dispositif collecteur selon la revendication 7, dans lequel ledit logiciel est un HAVi Havlet (105) et le réseau est un réseau HAVi.

9. Procédé permettant d'établir une connexion de flux de données dans un réseau numérique (100) comprenant un dispositif source (CED-B, CED-C) et un dispositif collecteur, ledit procédé comprenant les étapes consistant à :
- exécuter une interface utilisateur (210, 211) sur le dispositif collecteur ;
- sélectionner une fonction du dispositif source via l'interface utilisateur ;
**caractérisé par** les étapes consistant à :
- établir automatiquement une connexion pour une transmission de données du dispositif source de données au dispositif collecteur de données, ledit dispositif collecteur de données devenant le dispositif de destination par défaut pour une communication avec le dispositif source de données ; et
le procédé étant **caractérisé en outre en ce qu'**il comprend l'étape consistant **en ce que** ledit dispositif collecteur de données effectue une lecture des données reçues du dispositif source.

10. Procédé selon la revendication 9, comprenant en outre l'étape consistant à dériver l'interface utilisateur du logiciel téléchargé par le dispositif collecteur à partir du dispositif source.

11. Procédé selon la revendication 10, dans lequel le réseau est un réseau HAVi et le logiciel est un HAVi Havlet.

12. Procédé selon une des revendications 10 ou 11, dans lequel le logiciel téléchargé commande l'établissement de la connexion.

13. Procédé selon une des revendications 9 à 12, comprenant en outre l'étape, avant d'établir la connexion, consistant à vérifier l'existence d'une connexion préexistante entre le dispositif source et un autre dispositif collecteur, et à exécuter l'étape d'établissement de connexion uniquement dans la négative.

14. Procédé selon une des revendications 9 à 13, dans lequel ladite fonction est une fonction de lecture, et ledit dispositif source est un dispositif de stockage de données.
